(19) Europäisches Patentamt / European Patent Office / Office européen des brevets

(11) **EP 2 276 311 B1**

(12) **EUROPEAN PATENT SPECIFICATION**

(45) Date of publication and mention
of the grant of the patent:
**24.05.2017 Bulletin 2017/21**

(51) Int Cl.:
***H04W 74/08*** *(2009.01)*

(21) Application number: **10169491.7**

(22) Date of filing: **14.07.2010**

(54) **Methods to index the preambles in bandwidth request channel**

Verfahren zur Indexierung der Präambeln in einem Bandbreitenanfragekanal

Procédés pour indexer les préambules dans un canal à demande de bande passante

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.07.2009 US 270879 P
19.05.2010 US 783235**

(43) Date of publication of application:
**19.01.2011 Bulletin 2011/03**

(73) Proprietor: **Samsung Electronics Co., Ltd.
Suwon-si, Gyeonggi-do, 443-742 (KR)**

(72) Inventors:
• **Josiam, Kaushik
Gyeonggi-do (KR)**
• **Li, Ying
Gyeonggi-do (KR)**
• **Pi, Zhouyue
Gyeonggi-do (KR)**
• **Yoo, Hwa-Sun
Gyeonggi-do (KR)**

(74) Representative: **Nederlandsch Octrooibureau
P.O. Box 29720
2502 LS The Hague (NL)**

(56) References cited:
**WO-A1-2007/149729**

• **XIANGYING YANG: "Connection Management
and QoS DG AWD text with DG comment
resolution ; C80216m-09_0847", IEEE DRAFT;
C80216M-09_0847, IEEE-SA, PISCATAWAY, NJ
USA, vol. 802.16m, 27 April 2009 (2009-04-27),
pages 1-25, XP017797814, [retrieved on
2009-04-28]**
• **HWASUN YOO ET AL: "Proposed PHY structure
of Bandwidth Request Channel for IEEE 802.16m
Amendment Text ; C80216m-09_1548r2", IEEE
DRAFT; C80216M-09_1548R2, IEEE-SA,
PISCATAWAY, NJ USA, vol. 802.16m, no. r2, 6
July 2009 (2009-07-06), pages 1-8, XP017731456,
[retrieved on 2009-07-13]**
• **CHUN-YEN HSU ET AL: "Quick Access Message
for IEEE 802.16m ; C80216m-09_0905r3", IEEE
DRAFT; C80216M-09_0905R3, IEEE-SA,
PISCATAWAY, NJ USA, vol. 802.16m, no. r3, 4
May 2009 (2009-05-04), pages 1-11, XP017797984,
[retrieved on 2009-05-04]**
• **HWASUN YOO ET AL: "Performance Evaluation
of Proposed Physical Structure for BW REQ
Channel ; C80216m-09_1549", IEEE DRAFT;
C80216M-09_1549, IEEE-SA, PISCATAWAY, NJ
USA, vol. 802.16m, 7 July 2009 (2009-07-07),
pages 1-18, XP068001872, [retrieved on
2009-07-07]**

Description

TECHNICAL FIELD OF THE INVENTION

The present application relates generally to wireless communications and, more specifically, to indexing preamble sequences in a bandwidth request channel between a mobile station and base station.

BACKGROUND OF THE INVENTION

The IEEE 802.16m amendment allows a mobile station (MS) to transmit bandwidth requests (BWREQ) to indicate to a base station (BS) that it needs uplink (UL) bandwidth allocation. There are multiple methods by which a mobile station can request bandwidth from the base station. These methods include use of a contention based random access based bandwidth request indicator, a standalone bandwidth request, a piggybacked bandwidth request carried in an extended header in the MAC PDU, and a bandwidth request using fast feedback channel.

In the contention based random access method, multiple mobile stations contend for a limited set of preamble sequences on a common channel. The 802.16m standard defines 24 orthogonal access sequences, or preamble sequences. Each mobile station may choose a preamble sequence at random (out of the 24 possible preamble sequences), and hope that no other mobile station chooses that preamble sequence. If another mobile happens to choose the same preamble sequence, then the two preamble sequences are said to have collided at the BS.

HWASUN YOO ET AL: "Performance Evaluation of Proposed Physical Structure for BW REQ Channel; C80216m-09_1549", IEEE DRAFT; C80216M-09J549, 1EEE-SA, ISCATAWAY, NJ USA, vol. 802.16m, 7 July 2009, pages 1-18, discloses a configuration for identifying a 3-step or a 5-step process during bandwidth request based on detecting on/off of a bandwidth request message.

SUMMARY OF THE INVENTION

An apparatus proposed in our invention provided that a mobile station for requesting bandwidth in a wireless communication network, the mobile station configured to: transmit a quick access message and a bandwidth Request preamble sequence to a base station in a bandwidth Request channel; wherein B bits of the quick access message include $B_{MS}$ bits of a mobile station ID(STID) and (B - $B_{MS}$) bits of a bandwidth Request information.

An apparatus proposed in our invention provided that a base station for Uplink scheduling in a wireless communication network, the base station configured to: receive a quick access message and a bandwidth Request preamble sequence message from the mobile station in a bandwidth Request channel, the B bits of the quick access message include $B_{MS}$ bits of a mobile station ID(STID) and (B - $B_{MS}$) bits of a bandwidth Request information; determine a preamble index corresponding to the bandwidth Request preamble sequence, determine a (B - $B_{MS}$) bit portion from the B bit of the quick access message.

A method proposed in our invention provided that a met hod for requesting bandwidth in a wireless communication network, the method comprising the steps of: transmitting a quick access message and a bandwidth Request preamble sequence to a base stati on in a bandwidth Request channel; wherein B bits of the quick ac cess message include $B_{MS}$ bits of a mobile station ID(STID) and (B - $B_{MS}$) bits of a bandwidth Request information.

Before undertaking the DETAILED DESCRIPTION OF THE INVENTION below, it may be advantageous to set forth definitions of certain words and phrases used throughout this patent document:

the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an exemplary wireless network according to one embodiment of the present disclosure;
FIGURE 2 illustrates a wireless mobile station according to embodiments of the present disclosure;
FIGURE 3 depicts a 5-step bandwidth request procedure for an IEEE 802.16m-compliant mobile station, according to embodiments of the present disclosure;
FIGURE 4 depicts a 3-step bandwidth request quick access procedure for an IEEE 802.16m-compliant mobile station, according to embodiments of the present disclosure;
FIGURE 5 depicts a 3-step bandwidth request quick access procedure that defaults to a 5-step bandwidth request procedure, according to embodiments of the present disclosure;
FIGURE 6 depicts a resource structure for the bandwidth request using the OFDMA physical layer, for use with embodiments of the present disclosure; and
FIGURE 7 depicts a method for indexing preamble sequences, according to an embodiment of the present disclosure.

## DETAILED DESCRIPTION OF THE INVENTION

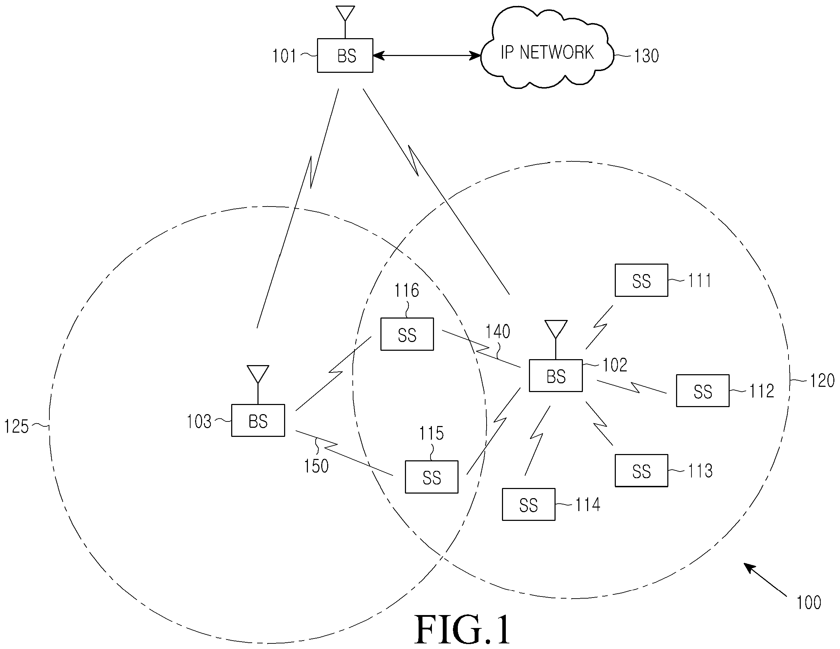

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications network.

The following documents and standards descriptions are hereby incorporated into the present disclosure as if fully set forth herein:

IEEE C802.16m-09/0010r2, IEEE 802.16 Amendment Working Document, Editor: Ron Murias, June 2009 (hereinafter the "0010r2" document); and
IEEE C802.16m-08/0003r9a, IEEE 802.16m System Description Document, Editor: Shkumbin Hamiti, June 2009 (hereinafter the "0003r9a" document).

The embodiments of this disclosure provide methods to index preamble sequences in a bandwidth request channel. The disclosed embodiments are based on use of a contention based random access based bandwidth request indicator. However, it will be understood that other bandwidth request methods may be used with this disclosure.

FIGURE 1 illustrates an exemplary wireless network 100 according to one embodiment of the present disclosure. In the illustrated embodiment, wireless network 100 includes base station (BS) 101, base station (BS) 102, and base station (BS) 103. Base station 101 communicates with base station 102 and base station 103. Base station 101 also communicates with Internet protocol (IP) network 130, such as the Internet, a proprietary IP network, or other data network.

Base station 102 provides wireless broadband access to the IP network 130, via base station 101, to a plurality of subscriber stations within coverage area 120 of base station 102. The first plurality of subscriber stations includes subscriber station (SS) 111, subscriber station (SS) 112, subscriber station (SS) 113, subscriber station (SS) 114, subscriber station (SS) 115 and subscriber station (SS) 116. Subscriber stations 111-116 may be any wireless communication device, such as, but not limited to, a mobile phone, mobile PDA and any mobile station (MS). In an exemplary embodiment, SS 111 may be located in a small business (SB), SS 112 may be located in an enterprise (E), SS 113 may be located in a WiFi hotspot (HS), SS 114 may be located in a residence, and SS 115 and SS 116 may be mobile devices.

Base station 103 provides wireless broadband access to the IP network 130, via base station 101, to a plurality of subscriber stations within coverage area 125 of base station 103. The plurality of subscriber stations within coverage area 125 includes subscriber station 115 and subscriber station 116. In alternate embodiments, base stations 102 and 103 may be connected directly to the Internet by means of a wired broadband connection, such as an optical fiber, DSL, cable or T1/E1 line, rather than indirectly through base station 101.

In other embodiments, base station 101 may be in communication with either fewer or more base stations. Furthermore, while only six subscriber stations are shown in FIGURE 1, it is understood that wireless network 100 may provide wireless broadband access to more than six subscriber stations. It is noted that subscriber station 115 and subscriber station 116 are on the edge of both coverage area 120 and coverage area 125. Subscriber station 115 and subscriber station 116 each communicate with both base station 102 and base station 103 and may be said to be cell-edge devices interfering with each other. For example, the communications between BS 102 and SS 116 may be interfering with the communications between BS 103 and SS 115. Additionally, the communications between BS 103 and SS 115 may be interfering with the communications between BS 102 and SS 116.

Subscriber stations 111-116 may use the broadband access to IP network 130 to access voice, data, video, video teleconferencing, and/or other broadband services. In an exemplary embodiment, one or more of subscriber stations 111-116 may be associated with an access point (AP) of a WiFi WLAN. Subscriber station 116 may be any of a number of mobile devices, including a wireless-enabled laptop computer, personal data assistant, notebook, handheld device, or other wireless-enabled device. Subscriber station 114 may be, for example, a wireless-enabled personal computer, a laptop computer, a gateway, or another device.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

Also, the coverage areas associated with base stations are not constant over time and may be dynamic (expanding or contracting or changing shape) based on changing transmission power levels of the base station and/or the subscriber stations, weather conditions, and other factors. In an embodiment, the radius of the coverage areas of the base stations, for example, coverage areas 120 and 125 of base stations 102 and 103, may extend in the range from less than 2 kilometers to about fifty kilometers from the base stations.

As is well known in the art, a base station, such as base station 101, 102, or 103, may employ directional antennas to support a plurality of sectors within the coverage area. In FIGURE 1, base stations 102 and 103 are depicted approximately in the center of coverage areas 120 and 125, respectively. In other embodiments, the use of directional antennas may locate the base station near the edge of the coverage area, for example, at the point of a cone-shaped or pear-shaped coverage area.

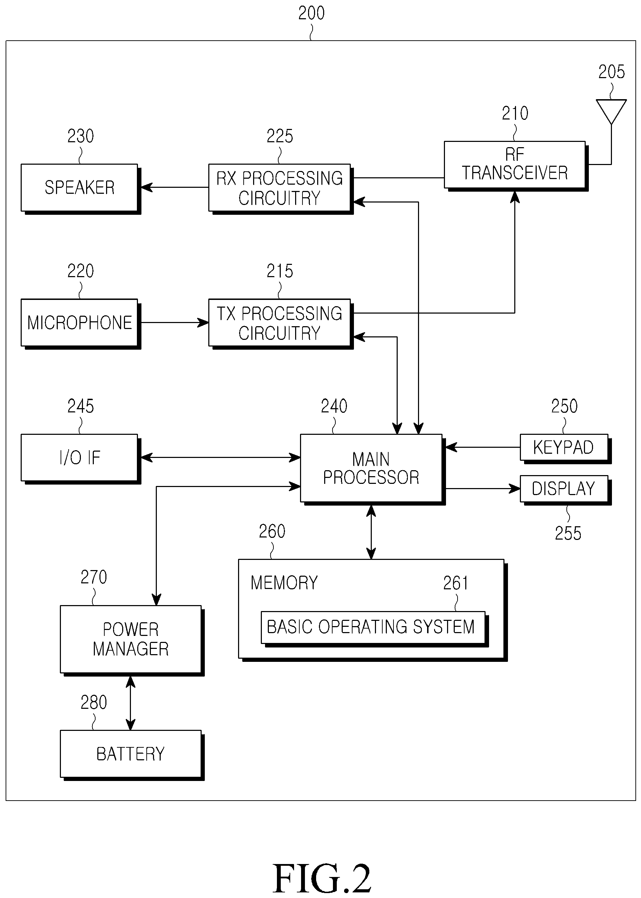

FIGURE 2 illustrates a wireless mobile station 200 according to embodiments of the present disclosure. In certain embodiments, wireless mobile station 200 may represent any of the subscriber stations 111-116 shown in FIGURE 1. The embodiment of wireless mobile station (MS) 200 illustrated in FIGURE 2 is for illustration only. Other embodiments of wireless mobile station 200 could be used without departing from the scope of this disclosure.

Wireless mobile station 200 comprises antenna 205, radio frequency (RF) transceiver 210, transmit (TX) processing circuitry 215, microphone 220, and receive (RX) processing circuitry 225. Mobile station 200 also comprises speaker 230, main processor 240, input/output (I/O) interface (IF) 245, keypad 250, display 255, memory 260, power manager 270, and battery 280.

Main processor 240 executes basic operating system (OS) program 261 stored in memory 260 in order to control the overall operation of mobile station 200. In one such operation, main processor 240 controls the reception of forward channel signals and the transmission of reverse channel signals by radio frequency (RF) transceiver 210, receiver (RX) processing circuitry 225, and transmitter (TX) processing circuitry 215, in accordance with well-known principles.

Main processor 240 is capable of executing other processes and programs resident in memory 260. Main processor 240 can move data into or out of memory 260, as required by an executing process. Main processor 240 is also coupled to I/O interface 245. The operator of mobile station 200 uses keypad 250 to enter data into mobile station 200. Alternate embodiments may use other types of displays.

A mobile station may transmit bandwidth requests to indicate to a base station that it needs uplink bandwidth allocation. There are multiple methods by which a mobile station can request bandwidth from the base station. These methods include use of a contention based random access based bandwidth request indicator, a standalone bandwidth request, a piggybacked bandwidth request carried in an extended header in the MAC PDU, and a bandwidth request using fast feedback channel.

Two procedures for requesting bandwidth using a contention based random access based bandwidth request indicator are now described. The two procedures, which may be supported concurrently, include a 5-step procedure and 3-step quick access procedure. The 5-step procedure may be used independently or as a fallback mode for the 3-step quick access procedure in case of a failure in decoding the quick access message.

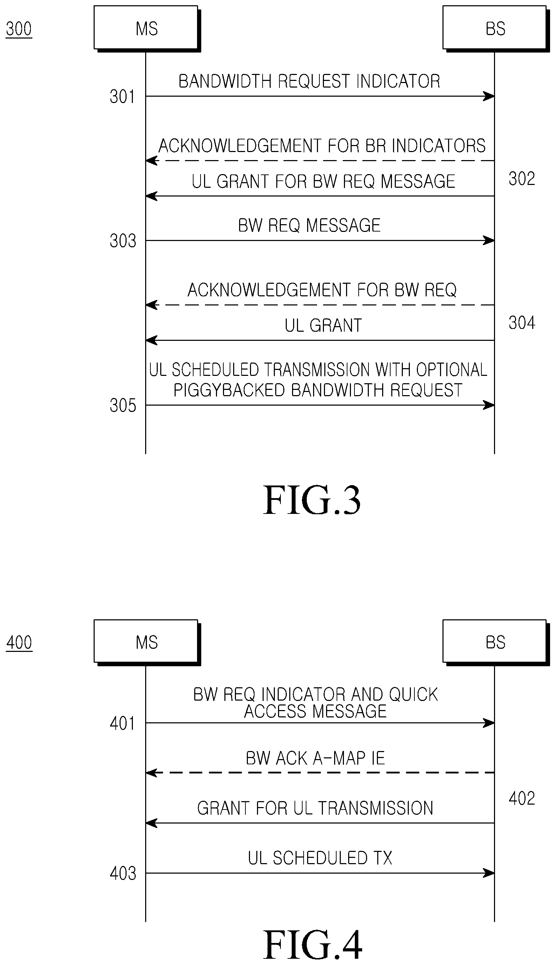

FIGURE 3 depicts a method incorporating the 5-step bandwidth request procedure for an IEEE 802.16m-compliant mobile station, according to one embodiment of the present disclosure. Method 300 is described with respect to mobile station 200 and base station 102. It is understood, however, that method 300 may be used with any similarly-configured wireless device and base station.

refering to the FIGURE 3, mobile station 200 sends a bandwidth request indicator, which is a preamble sequence selected randomly from the set of preamble sequences, to base station 102 in the resource allocated for a bandwidth request channel (step 301). A preamble sequence is a sequence of numbers that belongs to a class of sequences that have desirable properties like orthogonality or low correlation. In the case of IEEE 802.16m, the preamble sequences are all orthogonal.

Next, base station 102 provides a response to the bandwidth request indicator (step 302). The response depends on the success or failure of the decoding. If base station 102 successfully decodes the bandwidth request indicator, it transmits a grant for uplink transmission of the BW REQ header to mobile station 200.

Next, if mobile station 200 receives an uplink grant for the BW REQ header from base station 102, then mobile station 200 transmits a standalone bandwidth request message header to base station 102 in the resource indicated by the uplink grant (step 303). However, if mobile station 200 receives no uplink grant from base station 102, then mobile station 200 considers the bandwidth request as failed and may restart the procedure.

Next, on a successful decoding of the BW REQ header, base station 102 transmits an uplink grant to mobile station 200 (step 304). However, if the decoding fails, base station 102 sends a negative acknowledgement.

Next, assuming an uplink grant has been transmitted by base station 102, mobile station 200 transmits in the allocated resource indicated in the uplink grant (step 305). Alternatively, on receiving a negative acknowledgement, mobile station 200 considers the bandwidth request as failed and may restart the procedure.

FIGURE 4 depicts a method incorporating the 3-step bandwidth request quick access procedure for an IEEE 802.16m-compliant mobile station, according to one embodiment of the present disclosure. Method 400 is described with respect to mobile station 200 and base station 102. It is understood, however, that method 400 may be used with any similarly-configured wireless device and base station.

Refering to FIGURE 4, First, mobile station 200 sends a bandwidth request indicator and a quick access message to base station 102 in the resource allocated for a bandwidth request channel (step 401). The quick access message may include information to identify mobile station 200 and also the type of the bandwidth request, including the size of the bandwidth requested. A portion or all of the quick access message is transmitted in the data portion of the BW REQ channel in addition to the preamble sequence transmitted as the BW REQ indicator. In some embodiments, the quick access message is a 16-bit message, including a 12-bit mobile station ID (STID) and a 4-bit bandwidth size/priority indicator (BWSize) (also sometimes referred to as a flow ID). Quick access messages having more or fewer bits are also possible.

Next, base station 102 provides a response to the bandwidth request indicator and quick access message (step 402). The response depends on the success or failure of the decoding of both the preamble sequence and the quick access message. If base station 102 successfully decodes the bandwidth request indicator and quick access message, it transmits either an explicit acknowledgement using a BW ACK A-MAP IE or a grant for uplink transmission to mobile station 200. If base station 102 fails to decode the bandwidth request indicator or the quick access message, then base station 102 transmits a BW ACK A-MAP IE indicating a negative acknowledgement for the corresponding bandwidth request opportunity.

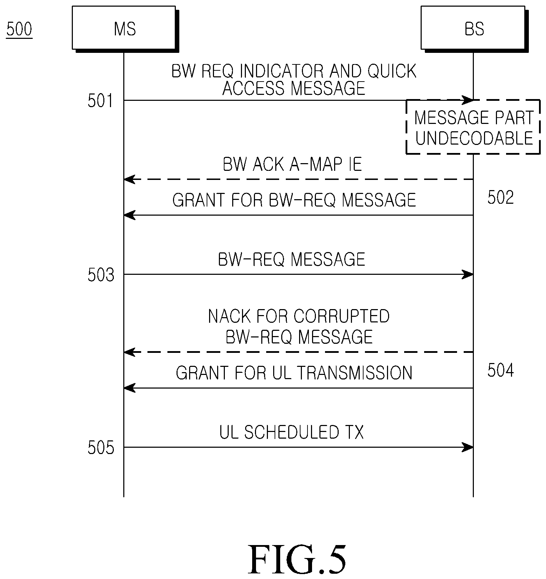

Next, assuming an uplink grant has been transmitted by base station 102, mobile station 200 begins transmission of the bandwidth request message (step 403). Alternatively, if mobile station 200 receives a negative acknowledgement indicating a quick access message decoding failure (and an acknowledgement for bandwidth request indicator decoding), or does not receive anything at all, then mobile station 200 starts a bandwidth request timer, and the BWREQ procedure defaults to a standard 5-step procedure, as seen in FIGURE 5.

FIGURE 5 depicts a 3-step bandwidth request quick access procedur e that defaults to a 5-step bandwidth request procedure, accordin g to embodiments of the present disclosure. In FIGURE 5, steps 50 1 and 502 correspond to steps 401 and 402 in FIGURE 4. In step 5 03, mobile station 200 transmits a standalone bandwidth request m essage header to base station 102.

If mobile station 200 receives an uplink grant using the default 5-step procedure, then mobile station 200 stops the timer. Alternatively, if it receives a negative ACK or the bandwidth request timer expires, then mobile station 200 considers the bandwidth request as failed and may restart the procedure (step 504).

Next, assuming an uplink grant has been transmitted by base station 102, mobile station 200 transmits in the allocated resource indicated in the uplink grant (step 505).

The 5-step bandwidth request procedure shown in FIGURE 5 is a fallback mode for the 3-step bandwidth request procedure shown in FIGURE 4. As illustrated in FIGURE 5 in step 502, base station 102, using the CDMA ALLOCATION A-MAP IE, grants mobile station 200 an allocation to transmit a standalone bandwidth request header.

The 3-step bandwidth request may be limited to only certain time-critical and frequently used messages. Examples of such time-critical and frequently used messages are:

    VoIP(AMR) full rate packet;
    VoIP(AMR) SID;
    MAC HO-REQ message;
    MAC signaling header (bandwidth request header);
    RoHC header; and
    TCP ACK.

The messages listed above are not exhaustive but are exemplary of the type of messages that can use the 3-step bandwidth request procedure. One common feature of the messages listed above is a computable message size. Thus, if the type of message for which bandwidth is being requested is known, the amount of bandwidth that must be granted for the mobile station to transmit that message is also known.

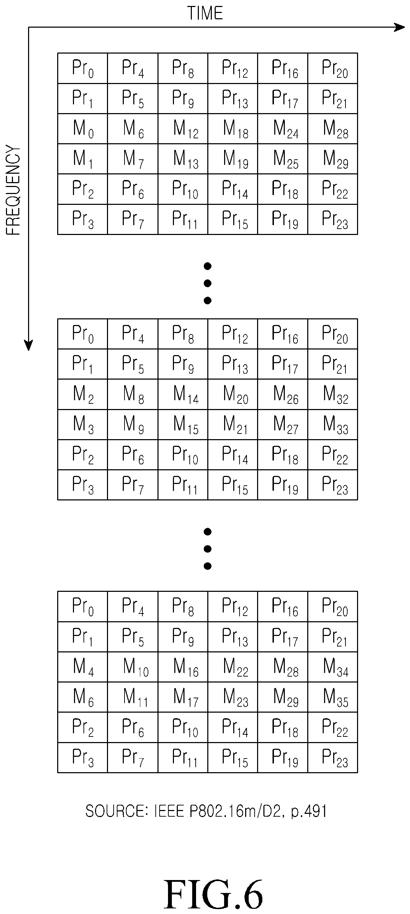

FIGURE 6 depicts a resource structure for the bandwidth request using the OFDMA physical layer, for use with embodiments of the present disclosure. In IEEE 802.16m, a bandwidth request channel is made up of three distributed bandwidth request tiles, where each bandwidth request tile is defined as six contiguous subcarriers by six OFDM symbols as shown in FIGURE 6. The basic concept of Orthogonal Frequency Division Multiple Access (OFDMA) and the concept of a physical layer resource unit configuration in IEEE 802.16m are described in the "0010r2" and "0003r9a" documents.

Refering to FIGURE 6, Each bandwidth request tile includes preamble sequences $Pr_0$-$Pr_{23}$. These are the preamble sequences for the bandwidth request indicator. The quick access message code words $M_0$-$M_{35}$ are distributed over all three bandwidth request tiles. The physical layer OFDMA resource is designed to support both the 3-step and 5-step bandwidth request procedures. A mobile station transmits either the bandwidth request indicator only (in the case of a 5-step bandwidth request) or both the bandwidth request indicator and a quick access message (in the case of a 3-step bandwidth request procedure).

The bandwidth request indicator is an access sequence or preamble sequence having a length of 24 bits. The 802.16m standard defines 24 orthogonal access sequences, each having a 24-bit length. If a mobile station has a message type for which the 3-step bandwidth request can be used, then the mobile station chooses one of the 24 sequences corresponding to the specific type. The mobile station then transmits both the preamble sequence (as a bandwidth request indicator) and the quick access message to the base station. To aid efficient transmission, a portion of the quick access message may be transmitted in the preamble index. Several embodiments are described below that map a portion of the quick access message to the preamble index.

Upon receipt of the bandwidth request indicator, the base station decodes the bandwidth request indicator, then proceeds to detect the quick access message. The quick access message is meant to be coherently decoded. The channel estimates for coherent detection of the quick access message are derived by using the detected bandwidth request indicator sequence as the pilot sequence. The design shown in FIGURE 6 detailing the placement of bandwidth request indicator and quick access message facilitates such channel estimation and coherent decoding.

The quick access message may consist of a sequence of B bits that contains: (1) a sequence of bits uniquely identifying the mobile station, and (2) the type of message for which the bandwidth is being requested. The type of message may include: (1) the priority for the message, (2) the flow ID of the message, and/or (3) a predefined message type. In an example of such an arrangement, a quick access message may contain a 12 bit MSID(Mobile Station Identifier) followed by a 4 bit message type, thus giving the quick access message a total of 16 bits. Therefore, given that a part of the quick access message is transmitted in the data portion of the BWREQ channel, the remaining bits can be identified using the preamble index.

One way to identify the remaining bits using the preamble index is to define a one-to-one mapping between the type of message and the bandwidth request indicator preamble sequence. As an example, assume VOIP(AMR) full rate packet is message type 1 and is mapped to preamble index 1. Upon receiving the preamble index 1, the base station knows that the bandwidth size requested is for a VOIP(AMR) full rate packet. The base station uses the preamble sequence to estimate the channel in each tile and then uses the channel estimate to coherently decode the quick access message, which contains the mobile station ID (STID). On successful decoding of the quick access message, the base station can grant uplink bandwidth to the mobile station requesting to send the VOIP(AMR) full rate packet.

While such a one-to-one mapping solves the problem of indicating the BWREQ size for a 3-step bandwidth request procedure, it may not be an efficient one. For example, if more than two users are requesting bandwidth for the same VOIP(AMR) full rate packet, the base station, while being able to resolve the BWREQ size, may not be able to estimate the channel from each user to the base station, and consequently cannot decode the quick access message. As a result, a collision between multiple mobile users may occur.

Using the embodiments described below, collisions can be mitigated for cases where more than one user uses bandwidth request for the same service. The disclosed embodiments provide various solutions where mapping of the preamble index depends not just on the BWREQ size, but also on the mobile station-specific STID.

In the following embodiments, methods for mapping the B bits of the quick access message for the 3-step BWREQ message are described. The BWREQ message includes $B_{MS}$ bits of the STID and the remaining ($B$-$B_{MS}$) bits indicating bandwidth request size in the preamble index. For ease of explanation, bits $b_0,b_1,b_2,\cdots,b_{BMS-1}$ are defined as the unique STID associated with the mobile station. The remaining bits $d_0,d_1,d_2,\cdots,d_{(B-BMS-1)}$ are defined as the bandwidth size/priority indicator (BWSize). These bits are used to generate a 3-bit index $p_0,p_1,p_2$, as described below. The decimal equivalent of the binary 3-bit index points to the index of the preamble sequence transmitted. A portion of the bits containing the station ID as well as the BWSize forms the quick access message. The preamble sequence and the quick access message are then transmitted to the base station in the bandwidth request channel. The base station extracts the preamble index from the preamble sequence and the bits are decoded from the quick access message. Both the preamble index and the quick access message bits are used to reconstruct both the STID and BWSize at the base station.

In one embodiment, bits $b_0,b_1,b_2,\cdots,b_{BMS-1}$ are grouped into 3 groups, where each group contains $k = \lfloor B_{MS}/3 \rfloor$ bits. A parity bit is generated for each of the 3 groups, and the preamble index (the decimal equivalent of the bits) is generated as shown below:

$$p_i = \mathrm{mod}\left(b_i + b_{i+3} + b_{i+6} + \ldots + b_{i+\left\lfloor \frac{b_{MS}}{3} \right\rfloor - 1} + d_{(B-B_{MS}-1)-2+i}, 2\right), \quad 0 \le i < 3$$

As an example, assume the quick access message is configured as a set of 16 bits, $s_0,s_1,s_2,\ldots,s_{15}$. Further assume the STID is 12 bits (indicated as $b_0,b_1,b_2,\ldots,b_{11}$) and the BWSize is 4 bits (indicated as $d_0,d_1,d_2,d_3$). Then the 3 bits whose decimal equivalent forms the preamble index are defined as shown below:

$$p_i = \mathrm{mod}\left(b_i + b_{i+3} + b_{i+6} + b_{i+9} + d_{i+1}, 2\right) \quad 0 \le i < 3$$

where mod is the modulo operator (bit wise XOR operation). The bits $b_0,b_1,b_2,\ldots,b_{11},d_0$ are carried in the data portion of the BWREQ tile.

A mapping is defined between the quick access message and the data + preamble sequence portion of the message as shown below.

Let $b_0,b_1,b_2,\ldots,b_{12}$ be the bits carried in the data portion of the BWREQ tile and $b_{13},b_{14},b_{15}$ be the bits that indicate the preamble index. Then,

$$b_0,b_1,b_2,\cdots,b_{12},b_{13},b_{14},b_{15} = s_0,s_1,s_2,\cdots,s_{12},p_0,p_1,p_2$$

where

$$p_i = \mathrm{mod}\left(s_i + s_{i+3} + s_{i+6} + s_{i+9} + s_{i+13}, 2\right) \quad 0 \le i < 3 \; .$$

When a base station receives the BWREQ message from the mobile station, it processes the BWREQ message. For example, the base station determines the preamble index corresponding to the received preamble sequence in the BWREQ message. The preamble index corresponds to the 3 parity bits. The base station then determines a 13-bit portion of the BWREQ message from the quick access message.

The base station groups the 13 bits into 3 groups, each group having a substantially equal number of bits. The base station then distributes the 3 parity bits to the 3 groups. The base station then recovers the 3-bit portion of the 16-bit message using a bit-wise XOR operation on the bits in the each of the 3 groups.

In another example, the quick access message is configured as a set of 15 bits, $s_0,s_1,s_2,\ldots,s_{14}$, where the bit string is composed of 12 bit STID and a 3 bit BWSize. A mapping is defined between the quick access message and the data + preamble sequence portion of the message as shown below. Let $b_0,b_1,b_2,\ldots,b_{11}$ be the bits carried in the data portion of the BWREQ tile and $b_{12},b_{13},b_{14}$ be the bits that indicate the preamble index. Then:

$$b_0,b_1,b_2,\cdots,b_{11},b_{12},b_{13},b_{14} = s_0,s_1,s_2,\cdots,s_{11},p_0,p_1,p_2$$

where

$$p_i = \mathrm{mod}\left(s_i + s_{i+3} + s_{i+6} + s_{i+9} + s_{i+12}, 2\right) \quad 0 \le i < 3 \; .$$

In another embodiment of the present disclosure, bits $b_0,b_1,b_2,\cdots,b_{B_{MS}-1}$ are grouped into 3 groups, with each group containing $k = \lfloor B_{MS}/3 \rfloor$ bits. A parity bit is defined for each of the 3 groups. The 3 parity bits $b_{PG1}, b_{PG2}, b_{PG3}$ are defined as shown below:

$$b_{PG1} = mod\left(b_0 + b_1 + b_2 + \ldots + b_k, \; 2\right)$$

$$b_{PG2} = mod(b_{k+1}+b_{k+2}+...+b_{2k}, \; 2)$$

$$b_{PG3} = mod(b_{2k+1}+b_{2k+2}+...+b_{3k}, \; 2).$$

However, in this embodiment, the 3 parity bits do not simply become the 3 bits of the preamble index. Instead, the preamble index bits $p_0$, $p_1$, $p_2$ are mapped as shown below:

$$\text{Preamble Index } p_0 = mod(d_{(B-Bms-1)-2}+b_{PG1}, \; 2)$$

$$\text{Preamble Index } p_1 = mod(d_{(B-Bms-1)-1}+b_{PG2}, \; 2)$$

$$\text{Preamble Index } p_2 = mod(d_{(B-Bms-1)}+b_{PG3}, \; 2).$$

Several other embodiments follow. One of the benefits of all of the following embodiments is that they may reduce and/or avoid the chances of collisions where more than one user requests the same service.

In another embodiment of the present disclosure, the STID bit sequence $b_0,b_1,b_2,\cdots,b_{B_{MS}-1}$ is first randomized using a randomizer function n(.) that permutes the indices of the bit sequence. In order to decode the randomizer function, n(.) must be known to both the mobile station as well as the base station. In the art, the randomizer n(.) is also known as an interleaver. Let the sequence $b'_0,b'_1,....,b'_{B_{ms}-1} = \pi\left(b_0,b_1,....,b_{B_{ms}-1}\right)$ be the randomized bit sequence. The 3 parity bits can then be generated as described in the preceding embodiment. First, the randomized bits $b'_0,b'_1,....,b'_{B_{ms}-1}$ are grouped into 3 groups, with each group containing $k = \lfloor B_{MS}/3 \rfloor$ bits. Then, a parity bit is defined for each of the 3 groups. The 3 parity bits $b_{PG1}$, $b_{PG2}$, $b_{PG3}$ are defined as shown below:

$$b_{PG1}=mod(\frac{b'_0 + b'_1 + \cdots + b'_k}{}, \; 2)$$

$$b_{PG2}=mod(\frac{b'_{k+1} + b'_{k+2} + \cdots + b'_{2k}}{}, \; 2)$$

$$b_{PG3}=mod(\frac{b'_{2k+1} + b'_{2k+2} + \cdots + b'_{3k}}{}, \; 2).$$

Then, the preamble index bits $p_0$, $p_1$, $p_2$ are mapped as shown below:

$$\text{Preamble Index } p_0 = mod(d_{(B-Bms-1)-2}+b_{PG1}, \; 2)$$

$$\text{Preamble Index } p_1 = mod(d_{(B-Bms-1)-1}+b_{PG2}, \; 2)$$

$$\text{Preamble Index } p_2 = mod(d_{(B-Bms-1)}+b_{PG3}, \; 2).$$

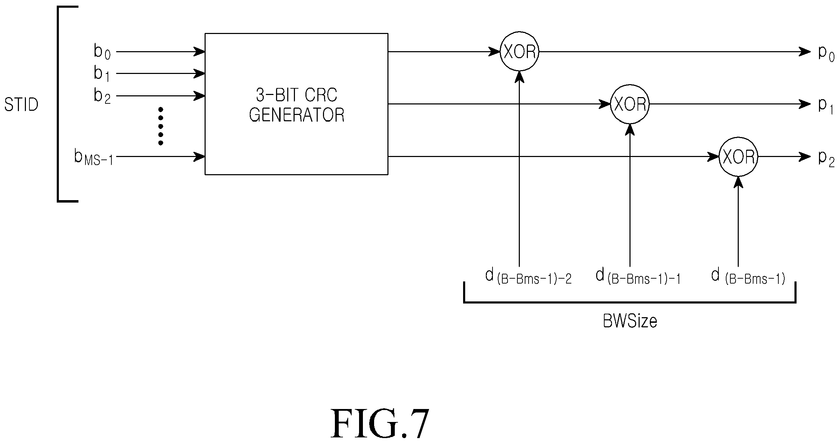

FIGURE 7 depicts a method for indexing preamble sequences, according to another embodiment of the present disclosure. As shown in FIGURE 7, a 3 bit cyclic redundancy check (CRC) is generated from the $B_{MS}$ bits of the STID. A bit wise XOR operation (modulo 2 addition) is used to add the 3 bit CRC with the 3 bit BWSize indicator to generate the preamble indices $p_0$, $p_1$ and $p_2$.

In another embodiment of the present disclosure, the STID bits $b_0,b_1,b_2,\cdots,b_{B_{MS}-1}$ are mapped into three parity bits $b_{PG1}$, $b_{PG2}$, $b_{PG3}$ using a hash function. The hash value HV is the decimal result of the modulo 3 operation on the STID value as described in the equation below:

$$HV = \mathrm{mod}\left( \sum_{i=0}^{B_{MS}-1} 2^i b_i, 3 \right).$$

Next, the bits $b_{PG1}$, $b_{PG2}$, $b_{PG3}$ are defined as the binary equivalent of the decimal value HV. The preamble index bits $p_0$, $p_1$, $p_2$ are then mapped as shown below:

$$\mathtt{Preamble\ Index}\ p_0\ =\ mod(d_{(B-Bms-1)-2}+b_{PG1},\ 2)$$

$$\mathtt{Preamble\ Index}\ p_1\ =\ mod(d_{(B-Bms-1)-1}+b_{PG2},\ 2)$$

$$\mathtt{Preamble\ Index}\ p_2\ =\ mod(d_{(B-Bms-1)}+b_{PG3},\ 2)$$

where mod is the modulo operator.

In another embodiment of the present disclosure, the three bits of the preamble index are derived by concatenating x bits from the $B_{MS}$ bits of the STID and the remaining (3-x) bits from the 3 bit BWSize. As an example, assume the quick access message is configured as a set of 16 bits, $s_0,s_1,s_2,\cdots,s_{15}$, where the bit string is composed of STID and BWSize. A mapping is defined between the quick access message and the data + preamble sequence portion of the message as follows: Let $b_0,b_1,b_2,\cdots,b_{12}$ be the bits carried in the data portion of the BWREQ tile and $b_{13},b_{14},b_{15}$ be the bits that indicate the preamble index. Then:

$$b_0,b_1,b_2,\cdots,b_{12},b_{13},b_{14},b_{15} = s_0,s_1,s_2,\cdots,s_{10},s_{13},s_{14},s_{15},s_{11},s_{12}$$

Thus, this method moves some of the bits of the STID toward the end of the quick access message.

In another embodiment of the present disclosure, if a STID is assigned to a mobile station incrementally, starting from the least significant bit (LSB), in certain cases some of the most significant bits (MSB) bits of STID may be zero. For example, for a femtocell base station whose coverage may only have a few mobile stations, then only the assigned LSB bits may be used to generate the three bits index. If only 3 LSB bits $b_0$, $b_1$, $b_2$ are assigned values, then the preamble index bits may be mapped as shown below:

$$p_0\ =\ b_0,\ \ p_1\ =\ b_1,\ \ p_2\ =\ b_2,$$

or

$$p\ =\ \pi(b_0 b_1 b_2)$$

where $\pi(.)$ is a randomization function.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

Although the present disclosure has been described with an exemplary embodiment, various changes and modifications may be suggested to one skilled in the art. It is intended that the present disclosure encompass such changes and modifications as fall within the scope of the appended claims.

## Claims

1. A mobile station (200) for requesting a bandwidth for an uplink scheduling in a wireless communication network, the mobile station comprising:

    a main processor (240) configured to configure bandwidth request information including a quick access message using first bits indicating an identifier of the mobile station and second bits indicating pre-defined bandwidth request information,
    a transceiver (201) configured to transmit (401) the bandwidth request information in a bandwidth request channel to a base station (101, 102, 103), and receiving, from the base station, a response indicating whether the band request information is successfully decoded (402);
    if the response indicates a decoding failure of the quick access message included in the bandwidth request information, the main processor (204) is configured to start a timer, and perform a procedure for requesting bandwidth with the base station, wherein bits of the bandwidth request information, $b_0$-$b_{15}$, are formed by the first bits and the second bits as shown in an equation below, $b_0,b_1,b_2,\cdots,b_{12},b_{13},b_{14},b_{15} = s_0,s_1,s_2,\cdots,s_{12},p_0,p_1,p_2$, where $p_i = \mathrm{mod}(s_i + s_{i+3} + s_{i+6} + s_{i+9} + s_{i+13},2)$ $0 \le i < 3$, $s_i$ are the bits of the quick access message included in the bandwidth request information, and wherein $p_0$, $p_1$, $p_2$ are bits of the bandwidth request information that form an index whose decimal equivalent forms the preamble index and are carried in bandwidth request preamble of bandwidth request channel using the preamble index.

2. The mobile station (200) as set forth in claim 1, wherein the main processor (204) is configured to restart the procedure for the requesting bandwidth if grant information for the uplink scheduling is not received until the timer is expired, and stop the timer if the grant information during the procedure is received from the base station (504).

3. The mobile station (200) as set forth in claim 1, wherein $b_{13},b_{14},b_{15}$ corresponding to the partial bits are identified using_the preamble index, $b_0$, $b_1$, $b_2$, ..., $b_{12}$ corresponding to remaining bits except for the partial bits are transmitted through a data region of the bandwidth request channel.

4. The mobile station (200) as set forth in claim 1, wherein the number of the partial bits is 3.

5. A base station (101, 102, 103) for uplink scheduling in a wireless communication network, the base station comprising:

    a transceiver configured to receive, from a mobile station (200), bandwidth request information including a quick access message configured using first bits indicating an identifier of the mobile station and second bits indicating pre-defined bandwidth request information, in a bandwidth request channel; and
    a controller configured to decode the bandwidth request information, and generate a response corresponding to a decoding result of the band request information, and control the transceiver to transmit the response to the mobile staiton, if the response indicates a decoding failure of the quick access message included in the bandwidth request information, start a timer, and perform a procedure for requesting bandwidth with the mobile station during a driving time of a timer started by the mobile station,
    wherein bits of the bandwidth request information, $b_0$-$b_{15}$, are formed by the first bits and the second bits as shown in an equation below, $b_0,b_1,b_2,\cdots,b_{12},b_{13},b_{14},b_{15} = s_0,s_1,s_2,\cdots,s_{12},p_0,p_1,p_2$, where $p_i = \mathrm{mod}(s_i + s_{i+3} + s_{i+6} + s_{i+9} + s_{i+13},2)$ $0 \le i < 3$, $s_i$ are the bits of the quick access message included in the bandwidth request information, and wherein $p_0$, $p_1$, $p_2$ are bits of the bandwidth request information that form an index whose decimal equivalent forms the preamble index and are carried in bandwidth request preamble of bandwidth request channel using the preamble index.

6. The base station (101, 102, 103) as set forth in claim 5, wherein if grant information for the uplink scheduling is not transmitted until the timer is expired, the procedure for the requesting bandwidth is restarted; and
if the grant information during the procedure is received from the base station (504), the timer is stopped.

7.  The base station (101, 102, 103) as set forth in claim 5,
    wherein $b_{13},b_{14},b_{15}$ corresponding to the partial bits are identified using the preamble index, $b_0,b_1,b_2,...,b_{12}$ corresponding to remaining bits except for the partial bits are transmitted through a data region of a bandwidth request channel.

8.  The mobile station (101, 102, 103) as set forth in claim 5, wherein the number of the partial bits is 3.

9.  A method for requesting bandwidth for an uplink scheduling by a mobile station (200) in a wireless communication network, the method comprising:

    configuring bandwidth request information including a quick access message using first bits indicating an identifier of the mobile station (200) and second bits indicating pre-defined bandwidth request information, and transmitting (401) the bandwidth request information to a base station (101, 102, 103) in a bandwidth request channel;
    receiving, from the base station, a response indicating whether the band request information is successfully decoded (402);
    if the response indicates a decoding failure of the quick access message included in the bandwidth request information, starting a timer, and performing a procedure for requesting bandwidth with the base station,
    wherein bits of the bandwidth request information, $b_0$-$b_{15}$, are formed by the first bits and the second bits as shown in an equation below, $b_0,b_1,b_2,\cdots,b_{12},b_{13},b_{14},b_{15} = s_0,s_1,s_2,\cdots,s_{12},p_0,p_1,p_2$, where $p_i = \mathrm{mod}(s_i + s_{i+3} + s_{i+6} + s_{i+9} + s_{i+13},2)$ $0 \leq i < 3$, $s_i$ are the bits of the quick access message included in the bandwidth request information, and wherein $p_0$, $p_1$, $p_2$ are bits of the bandwidth request information that form an index whose decimal equivalent forms the preamble index and are carried in bandwidth request preamble of bandwidth request channel using the preamble index.

10. The method as set forth in claim 9, further comprising:

    restarting the procedure for the requesting bandwidth if grant information for the uplink scheduling is not received until the timer is expired; and
    stopping the timer if the grant information during the procedure is received from the base station (504).

11. The method as set forth in claim 9, wherein $b_{13},b_{14},b_{15}$ corresponding to the partial bits are identified using the preamble index, $b_0,b_1,b_2,...,b_{12}$ corresponding to remaining bits except for the partial bits are transmitted through a data region of the bandwidth request channel.

12. The method as set forth in claim 9, wherein the number of the partial bits is 3.

13. A method for uplink scheduling by a base station (101, 102, 103) in a wireless communication network, the method comprising:

    receiving, from a mobile station (200), bandwidth request information including a quick access message configured using first bits indicating an identifier of the mobile station and second bits indicating pre-defined bandwidth request information, in a bandwidth request channel; and
    decoding the bandwidth request information, generating a response corresponding to a decoding result of the band request information, and controlling the transceiver to transmit the response to the mobile station, and if the response indicates a decoding failure of the quick access message included in the bandwidth request information, starting a timer, and performing a procedure for requesting bandwidth with the mobile station during a driving time of a timer started by the mobile station,
    wherein bits of the bandwidth request information, $b_0$-$b_{15}$, are formed by the first bits and the second bits as shown in an equation below, $b_0,b_1,b_2,\cdots,b_{12},b_{13},b_{14},b_{15} = s_0,s_1,s_2,\cdots,s_{12},p_0,p_1,p_2$, where $p_i = \mathrm{mod}(s_i + s_{i+3} + s_{i+6} + s_{i+9} + s_{i+13},2)$ $0 \leq i < 3$, $s_i$ are the bits of the quick access message included in the bandwidth request information, and wherein $p_0$, $p_1$, $p_2$ are bits of the bandwidth request information that form an index whose decimal equivalent forms the preamble index and are carried in bandwidth request preamble of bandwidth request channel using the preamble index.

**EP 2 276 311 B1**

**14.** The method as set forth in claim 13, wherein if grant information for the uplink scheduling is not transmitted until the timer is expired, the procedure for the requesting bandwidth is restarted; and

if the grant information during the procedure is received from the base station (504), the timer is stopped.

**15.** The method as set forth in claim 13,

wherein $b_{13},b_{14},b_{15}$ corresponding to the partial bits are <u>identified using</u> the preamble index $b_0,b_1,b_2,...,b_{12}$ corresponding to remaining bits except for the partial bits are transmitted through a data region of the bandwidth request channel.

**16.** The method as set forth in claim 13, wherein the number of the partial bits is 3.

**Patentansprüche**

**1.** Mobilstation (200) zum Anfordern einer Bandbreite für eine Aufwärtsrichtungsplanung in einem Drahtloskommunikationsnetz, wobei die Mobilstation Folgendes umfasst:

einen Hauptprozessor (240), der konfiguriert ist, Bandbreitenanforderungsinformationen, die eine Schnellzugriffsmitteilung beinhalten, unter Verwendung erster Bits, die einen Identifikator der Mobilstation angeben, und zweiter Bits zu konfigurieren, die vordefinierte Bandbreitenanforderungsinformationen angeben,

einen Sendeempfänger (201), der konfiguriert ist, die Bandbreitenanforderungsinformationen in einem Bandbreitenanforderungskanal zu einer Basisstation (101, 102, 103) zu senden (401), und der von der Basisstation eine Antwort empfängt, die angibt, ob die Bandanforderungsinformationen erfolgreich decodiert worden sind (402);

wenn die Antwort einen Decodierfehler der Schnellzugriffsmitteilung angibt, die in den Bandbreitenanforderungsinformationen beinhaltet ist, ist der Hauptprozessor (204) konfiguriert, einen Zeitgeber zu starten und ein Verfahren zum Anfordern von Bandbreite mit der Basisstation durchzuführen, wobei Bits der Bandbreitenanforderungsinformationen, $b_0$-$b_{15}$, durch die ersten Bits und die zweiten Bits, wie in einer Gleichung unten gezeigt, gebildet werden, $b_0,b_1,b_2,...,b_{12},b_{13},b_{14},b_{15} = s_0,s_1,s_2,...,s_{12},p_0,p_1,p_2$, und wobei $p_i = \text{mod}$ $(s_i+s_{i+3}+s_{i+6}+s_{i+9}+s_{i+13}, 2)$ $0 \leq i < 3$ ist, $s_i$ die Bits der Schnellzugriffsmitteilung sind, die in der Bandbreitenanforderungsinformationen beinhaltet ist, wobei $p_0$, $p_1$, $p_2$ Bits der Bandbreitenanforderungsinformationen sind, die einen Index bilden, deren Dezimaläquivalent den Präambelindex bildet, und die in der Bandbreitenanforderungspräambel des Bandbreitenanforderungskanals transportiert werden, der den Präambelindex verwendet.

**2.** Mobilstation (200) nach Anspruch 1, wobei der Hauptprozessor (204) konfiguriert ist, das Verfahren zum Anfordern von Bandbreite neu zu starten, wenn keine Erteilungsinformationen für die Aufwärtsrichtungsplanung empfangen worden sind, bis der Zeitgeber abgelaufen ist, und den Zeitgeber anzuhalten, wenn die Erteilungsinformationen während des Verfahrens von der Basisstation empfangen werden (504).

**3.** Mobilstation (200) nach Anspruch 1, wobei $b_{13},b_{14},b_{15}$, die den Partialbits entsprechen, mithilfe des Präambelindex identifiziert werden, $b_0$, $b_1$, $b_2$, ..., $b_{12}$, die den übrigen Bits außer den Partialbits entsprechen, über einen Datenbereich des Bandbreitenanforderungskanals gesendet werden.

**4.** Mobilstation (200) nach Anspruch 1, wobei die Anzahl der Partialbits 3 ist.

**5.** Basisstation (101, 102, 103) zur Aufwärtsrichtungsplanung in einem Drahtloskommunikationsnetz, wobei die Basisstation Folgendes umfasst:

einen Sendeempfänger, der konfiguriert ist, von einer Mobilstation (200) Bandbreitenanforderungsinformationen, die eine Schnellzugriffsmitteilung beinhalten, die unter Verwendung erster Bits, die einen Identifikator der Mobilstation angeben, und zweiter Bits konfiguriert worden ist, die vordefinierte Bandbreitenanforderungsinformationen angeben, in einem Bandbreitenanforderungskanal zu empfangen; und

eine Steuerung, die konfiguriert ist, die Bandbreitenanforderungsinformationen zu decodieren und eine Antwort zu generieren, die einem Decodierergebnis der Bandanforderungsinformationen entspricht, und den Sendeempfänger zu steuern, um die Antwort zur Mobilstation zu senden, wenn die Antwort einen Decodierfehler der Schnellzugriffsmitteilung angibt, die in den Bandbreitenanforderungsinformationen beinhaltet ist, einen Zeitgeber zu starten und ein Verfahren zum Anfordern von Bandbreite mit der Mobilstation während einer Laufzeit eines Zeitgebers durchzuführen, der durch die Mobilstation gestartet wird,

12

wobei Bits der Bandbreitenanforderungsinformationen, $b_0$-$b_{15}$, durch die ersten Bits und die zweiten Bits, wie in einer Gleichung unten gezeigt, gebildet werden, $b_0,b_1,b_2,...,s_{12},b_{13},b_{14},b_{15} = s_0,s_1, s_2,..., s_{12},p_0,p_1,p_2$, wobei $p_i = \mathrm{mod}(s_i+s_{i+3}+s_{i+6}+s_{i+9}+s_{i+13},2)$ $0 \leq i < 3$ ist, $s_i$ die Bits der Schnellzugriffsmitteilung sind, die in der Bandbreitenanforderungsinformationen beinhaltet ist, und wobei $p_0$, $p_1$, $p_2$ Bits der Bandbreitenanforderungsinformationen sind, die einen Index bilden, deren Dezimaläquivalent den Präambelindex bildet, und die in der Bandbreitenanforderungspräambel des Bandbreitenanforderungskanals transportiert werden, der den Präambelindex verwendet.

6. Basisstation (101, 102, 103) nach Anspruch 5, wobei, wenn keine Erteilungsinformationen für die Aufwärtsrichtungsplanung gesendet worden sind, bis der Zeitgeber abgelaufen ist, das Verfahren für das Anfordern von Bandbreite neu gestartet wird; und
wenn die Erteilungsinformationen während des Verfahrens von der Basisstation empfangen werden (504), der Zeitgeber angehalten wird.

7. Basisstation (101, 102, 103) nach Anspruch 5,
wobei $b_{13},b_{14},b_{15}$, die den Partialbits entsprechen, mithilfe des Präambelindex identifiziert werden, $b_0,b_1,b_2, .., b_{12}$, die den übrigen Bits außer den Partialbits entsprechen, über einen Datenbereich eines Bandbreitenanforderungskanals gesendet werden.

8. Mobilstation (101, 102, 103) nach Anspruch 5, wobei die Anzahl der Partialbits 3 ist.

9. Verfahren zum Anfordern von Bandbreite für eine Aufwärtsrichtungsplanung durch eine Mobilstation (200) in einem Drahtloskommunikationsnetz, wobei das Verfahren Folgendes umfasst:

Konfigurieren von Bandbreitenanforderungsinformationen, die eine Schnellzugriffsmitteilung beinhalten, unter Verwendung erster Bits, die einen Identifikator der Mobilstation (200) angeben, und zweiter Bits, die vordefinierte Bandbreitenanforderungsinformationen angeben, und Senden (401) der Bandbreitenanforderungsinformationen in einem Bandbreitenanforderungskanal zu einer Basisstation (101, 102, 103);
Empfangen einer Antwort, die angibt, ob die Bandanforderungsinformationen erfolgreich decodiert worden sind, von der Basisstation (402);
wenn die Antwort einen Decodierfehler der Schnellzugriffsmitteilung angibt, die in den Bandbreitenanforderungsinformationen beinhaltet ist, Starten eines Zeitgebers und Durchführen eines Verfahren zum Anfordern von Bandbreite mit der Basisstation,
wobei Bits der Bandbreitenanforderungsinformationen, $b_0$-$b_{15}$, durch die ersten Bits und die zweiten Bits, wie in einer Gleichung unten gezeigt, gebildet werden, $b_0,b_1,b_2,...,b_{12},b_{13},b_{14},b_{15} = s_0, s_1, s_2, ..., s_{12},p_0,p_1,p_2$, wobei $p_i = \mathrm{mod}(s_i+s_{i+3}+s_{i+6}+s_{i+9}+s_{i+13},2)$ $0 \leq i < 3$ ist, $s_i$ die Bits der Schnellzugriffsmitteilung sind, die in der Bandbreitenanforderungsinformationen beinhaltet ist, und wobei $p_0$, $p_1$, $p_2$ Bits der Bandbreitenanforderungsinformationen sind, die einen Index bilden, deren Dezimaläquivalent den Präambelindex bildet, und die in der Bandbreitenanforderungspräambel des Bandbreitenanforderungskanals transportiert werden, der den Präambelindex verwendet.

10. Verfahren nach Anspruch 9, das ferner Folgendes umfasst:

Neustarten des Verfahrens zum Anfordern von Bandbreite, wenn keine Erteilungsinformationen für die Aufwärtsrichtungsplanung empfangen worden sind, bis der Zeitgeber abgelaufen ist; und
Anhalten des Zeitgebers, wenn die Erteilungsinformationen während des Verfahrens von der Basisstation empfangen werden (504).

11. Verfahren nach Anspruch 9,
wobei $b_{13},b_{14},b_{15}$, die den Partialbits entsprechen, mithilfe des Präambelindex identifiziert werden, $b_0,b_1,b_2,...,b_{12}$, die den übrigen Bits außer den Partialbits entsprechen, über einen Datenbereich des Bandbreitenanforderungskanals gesendet werden.

12. Verfahren nach Anspruch 9, wobei die Anzahl der Partialbits 3 ist.

13. Verfahren zur Aufwärtsrichtungsplanung durch eine Basisstation (101, 102, 103) in einem Drahtloskommunikationsnetz, wobei das Verfahren Folgendes umfasst:

Empfangen von Bandbreitenanforderungsinformationen, die eine Schnellzugriffsmitteilung beinhalten, die unter Verwendung erster Bits, die einen Identifikator der Mobilstation angeben, und zweiter Bits konfiguriert worden ist, die vordefinierte Bandbreitenanforderungsinformationen angeben, von einer Mobilstation (200) in einem Bandbreitenanforderungskanal und

Decodieren der Bandbreitenanforderungsinformationen, Generieren einer Antwort, die einem Decodierergebnis der Bandanforderungsinformationen entspricht, und Steuern des Sendeempfängers, um die Antwort zur Mobilstation zu senden, und wenn die Antwort einen Decodierfehler der Schnellzugriffsmitteilung angibt, die in den Bandbreitenanforderungsinformationen beinhaltet ist, Starten eines Zeitgebers und Durchführen eines Verfahrens zum Anfordern von Bandbreite mit der Mobilstation während einer Laufzeit eines Zeitgebers, der durch die Mobilstation gestartet wird,

wobei Bits der Bandbreitenanforderungsinformationen, $b_0$-$b_{15}$, durch die ersten Bits und die zweiten Bits, wie in einer Gleichung unten gezeigt, gebildet werden, $b_0,b_1,b_2,...,b_{12},b_{13},b_{14},b_{15} = s_0, s_1, s_2, ..., s_{12},p_0,p_1,p_2$, wobei $p_i = \mathrm{mod}(s_i+s_{i+3}+s_{i+6}+s_{i+9}+s_{i+13},2)$ $0 \leq i < 3$ ist, $s_i$ die Bits der Schnellzugriffsmitteilung sind, die in der Bandbreitenanforderungsinformationen beinhaltet ist, und wobei $p_0$, $p_1$, $p_2$ Bits der Bandbreitenanforderungsinformationen sind, die einen Index bilden, deren Dezimaläquivalent den Präambelindex bildet, und die in der Bandbreitenanforderungspräambel des Bandbreitenanforderungskanals transportiert werden, der den Präambelindex verwendet.

**14.** Verfahren nach Anspruch 13, wobei, wenn keine Erteilungsinformationen für die Aufwärtsrichtungsplanung gesendet worden sind, bis der Zeitgeber abgelaufen ist, das Verfahren für das Anfordern von Bandbreite neu gestartet wird; und wenn die Erteilungsinformationen während des Verfahrens von der Basisstation empfangen werden (504), der Zeitgeber angehalten wird.

**15.** Verfahren nach Anspruch 13,
wobei $b_{13},b_{14},b_{15}$, die den Partialbits entsprechen, mithilfe des Präambelindex identifiziert werden, $b_0,b_1,b_2,...,b_{12}$, die den übrigen Bits außer den Partialbits entsprechen, über einen Datenbereich des Bandbreitenanforderungskanals gesendet werden.

**16.** Verfahren nach Anspruch 13, wobei die Anzahl der Partialbits 3 ist.

## Revendications

**1.** Station mobile (200) pour demander une largeur de bande pour une programmation de liaison montante dans un réseau de communication sans fil, la station mobile comprenant :

un processeur principal (240) configuré pour configurer des informations de demande de largeur de bande comprenant un message d'accès rapide en utilisant des premiers bits indiquant un identifiant de la station mobile et des deuxièmes bits indiquant des informations de demande de largeur de bande prédéfinies,
un émetteur-récepteur (201) configuré pour transmettre (401) les informations de demande de largeur de bande dans un canal de demande de largeur de bande à destination d'une station de base (101, 102, 103), et recevoir, en provenance de la station de base, une réponse indiquant si les informations de demande de largeur de bande sont décodées avec succès (402) ;
si la réponse indique un échec de décodage du message d'accès rapide inclus dans les informations de demande de largeur de bande, le processeur principal (204) est configuré pour démarrer une minuterie, et effectuer une procédure de demande de largeur de bande auprès de la station de base, dans laquelle des bits des informations de demande de largeur de bande, $b_0$-$b_{15}$, sont constitués des premiers bits et des deuxièmes bits selon l'équation suivante : $b_0, b_1, b_2, ..., b_{12}, b_{13}, b_{14}, b_{15} = s_0, s_1, s_2, ..., s_{12}, p_0, p_1, p_2$, où $p_i = \mathrm{mod}(s_i + s_{i+3} + s_{i+6} + s_{i+9} + s_{i+13}, 2)$ $0 \leq i < 3$, $s_i$ sont les bits du message d'accès rapide inclus dans les informations de demande de largeur de bande, et où $p_0$, $p_1$, $p_2$ sont des bits des informations de demande de largeur de bande constituant un indice dont l'équivalent décimal constitue l'indice de préambule et sont portés dans un préambule de demande de largeur de bande d'un canal de demande de largeur de bande en utilisant l'indice de préambule.

**2.** Station mobile (200) selon la revendication 1, dans laquelle le processeur principal (204) est configuré pour redémarrer la procédure de demande de largeur de bande si des informations d'octroi pour la programmation de liaison montante ne sont pas reçues avant l'expiration de la minuterie, et arrêter la minuterie si les informations d'octroi au cours de la procédure sont reçues en provenance de la station de base (504).

**3.** Station mobile (200) selon la revendication 1, dans laquelle $b_{13}$, $b_{14}$, $b_{15}$ correspondant aux bits partiels sont identifiés en utilisant l'indice de préambule, $b_0$, $b_1$, $b_2$, ..., $b_{12}$ correspondant à des bits restants à l'exception des bits partiels sont transmis par l'intermédiaire d'une région de données du canal de demande de largeur de bande.

**4.** Station mobile (200) selon la revendication 1, dans laquelle le nombre de bits partiels est 3.

**5.** Station de base (101, 102, 103) pour une programmation de liaison montante dans un réseau de communication sans fil, la station de base comprenant :

un émetteur-récepteur configuré pour recevoir, en provenance d'une station mobile (200), des informations de demande de largeur de bande comprenant un message d'accès rapide configuré en utilisant des premiers bits indiquant un identifiant de la station mobile et des deuxièmes bits indiquant des informations de demande de largeur de bande prédéfinies, dans un canal de demande de largeur de bande ; et

un organe de commande configuré pour décoder les informations de demande de largeur de bande, générer une réponse correspondant à un résultat de décodage des informations de demande de largeur de bande, et commander à l'émetteur-récepteur de transmettre la réponse à la station mobile, et si la réponse indique un échec de décodage du message d'accès rapide inclus dans les informations de demande de largeur de bande, démarrer une minuterie, et effectuer une procédure de demande de largeur de bande auprès de la station mobile au cours d'un temps de fonctionnement d'une minuterie démarrée par la station mobile,

dans laquelle des bits des informations de demande de largeur de bande, $b_0$-$b_{15}$, sont constitués des premiers bits et des deuxièmes bits selon l'équation suivante : $b_0$, $b_1$, $b_2$, ..., $b_{12}$, $b_{13}$, $b_{14}$, $b_{15}$ = $s_0$, $s_1$, $s_2$, ..., $s_{12}$, $p_0$, $p_1$, $p_2$, où $p_i$=mod($s_i$ + $s_{i+3}$ + $s_{i+6}$ + $s_{i+9}$ + $s_{i+13}$, 2) $0 \leq i < 3$, $s_i$ sont les bits du message d'accès rapide inclus dans les informations de demande de largeur de bande, et où $p_0$, $p_1$, $p_2$ sont des bits des informations de demande de largeur de bande constituant un indice dont l'équivalent décimal constitue l'indice de préambule et sont portés dans un préambule de demande de largeur de bande d'un canal de demande de largeur de bande en utilisant l'indice de préambule.

**6.** Station de base (101, 102, 103) selon la revendication 5, dans laquelle si des informations d'octroi pour la programmation de liaison montante ne sont pas transmises avant l'expiration de la minuterie, la procédure de demande de largeur de bande est redémarrée ; et

si les informations d'octroi au cours de la procédure sont reçues en provenance de la station de base (504), la minuterie est arrêtée.

**7.** Station de base (101, 102, 103) selon la revendication 5, dans laquelle $b_{13}$, $b_{14}$, $b_{15}$ correspondant aux bits partiels sont identifiés en utilisant l'indice de préambule, $b_0$, $b_1$, $b_2$, ..., $b_{12}$ correspondant à des bits restants à l'exception des bits partiels sont transmis par l'intermédiaire d'une région de données d'un canal de demande de largeur de bande.

**8.** Station de base (101, 102, 103) selon la revendication 5, dans laquelle le nombre de bits partiels est 3.

**9.** Procédé pour demander une largeur de bande pour une programmation de liaison montante par une station mobile (200) dans un réseau de communication sans fil, le procédé comprenant :

configurer des informations de demande de largeur de bande comprenant un message d'accès rapide en utilisant des premiers bits indiquant un identifiant de la station mobile (200) et des deuxièmes bits indiquant des informations de demande de largeur de bande prédéfinies, et transmettre (401) les informations de demande de largeur de bande dans un canal de demande de largeur de bande à destination d'une station de base (101, 102, 103) ;

recevoir, en provenance de la station de base, une réponse indiquant si les informations de demande de largeur de bande sont décodées avec succès (402) ;

si la réponse indique un échec de décodage du message d'accès rapide inclus dans les informations de demande de largeur de bande, démarrer une minuterie, et effectuer une procédure de demande de largeur de bande auprès de la station de base,

dans lequel des bits des informations de demande de largeur de bande, $b_0$-$b_{15}$, sont constitués des premiers bits et des deuxièmes bits selon l'équation suivante : $b_0$, $b_1$, $b_2$, ..., $b_{12}$, $b_{13}$, $b_{14}$, $b_{15}$ = $s_0$, $s_1$, $s_2$, ..., $s_{12}$, $p_0$, $p_1$, $p_2$, où $p_i$=mod($s_i$ + $s_{i+3}$ + $s_{i+6}$ + $s_{i+9}$ + $s_{i+13}$, 2) $0 \leq i < 3$, $s_i$ sont les bits du message d'accès rapide inclus dans les informations de demande de largeur de bande, et où $p_0$, $p_1$, $p_2$ sont des bits des informations de demande de largeur de bande constituant un indice dont l'équivalent décimal constitue l'indice de préambule et sont portés dans un préambule de demande de largeur de bande d'un canal de demande de largeur de bande en utilisant l'indice de préambule.

**10.** Procédé selon la revendication 9, comprenant en outre :

redémarrer la procédure de demande de largeur de bande si des informations d'octroi pour la programmation de liaison montante ne sont pas reçues avant l'expiration de la minuterie ; et
arrêter la minuterie si les informations d'octroi au cours de la procédure sont reçues en provenance de la station de base (504).

**11.** Procédé selon la revendication 9, dans lequel $b_{13}$, $b_{14}$, $b_{15}$ correspondant aux bits partiels sont identifiés en utilisant l'indice de préambule, $b_0$, $b_1$, $b_2$, ..., $b_{12}$ correspondant à des bits restants à l'exception des bits partiels sont transmis par l'intermédiaire d'une région de données du canal de demande de largeur de bande.

**12.** Procédé selon la revendication 9, dans lequel le nombre de bits partiels est 3.

**13.** Procédé pour une programmation de liaison montante par une station de base (101, 102, 103) dans un réseau de communication sans fil, le procédé comprenant :

recevoir, en provenance d'une station mobile (200), des informations de demande de largeur de bande comprenant un message d'accès rapide configuré en utilisant des premiers bits indiquant un identifiant de la station mobile et des deuxièmes bits indiquant des informations de demande de largeur de bande prédéfinies, dans un canal de demande de largeur de bande ; et
décoder les informations de demande de largeur de bande, générer une réponse correspondant à un résultat de décodage des informations de demande de largeur de bande, et commander à l'émetteur-récepteur de transmettre la réponse à la station mobile, et si la réponse indique un échec de décodage du message d'accès rapide inclus dans les informations de demande de largeur de bande, démarrer une minuterie, et effectuer une procédure de demande de largeur de bande auprès de la station mobile au cours d'un temps de fonctionnement d'une minuterie démarrée par la station mobile,
dans lequel des bits des informations de demande de largeur de bande, $b_0$-$b_{15}$, sont constitués des premiers bits et des deuxièmes bits selon l'équation suivante : $b_0$, $b_1$, $b_2$, ..., $b_{12}$, $b_{13}$, $b_{14}$, $b_{15}$ = $s_0$, $s_1$, $s_2$, ..., $s_{12}$, $p_0$, $p_1$, $p_2$, où $p_i$=mod($s_i$ + $s_{i+3}$ + $s_{i+6}$ + $s_{i+9}$ + $s_{i+13}$, 2) $0 \leq i < 3$, $s_i$ sont les bits du message d'accès rapide inclus dans les informations de demande de largeur de bande, et où $p_0$, $p_1$, $p_2$ sont des bits des informations de demande de largeur de bande constituant un indice dont l'équivalent décimal constitue l'indice de préambule et sont portés dans un préambule de demande de largeur de bande d'un canal de demande de largeur de bande en utilisant l'indice de préambule.

**14.** Procédé selon la revendication 13, dans lequel si des informations d'octroi pour la programmation de liaison montante ne sont pas transmises avant l'expiration de la minuterie, la procédure de demande de largeur de bande est redémarrée ; et
si les informations d'octroi au cours de la procédure sont reçues en provenance de la station de base (504), la minuterie est arrêtée.

**15.** Procédé selon la revendication 13, dans lequel $b_{13}$, $b_{14}$, $b_{15}$ correspondant aux bits partiels sont identifiés en utilisant l'indice de préambule, $b_0$, $b_1$, $b_2$, ..., $b_{12}$ correspondant à des bits restants à l'exception des bits partiels sont transmis par l'intermédiaire d'une région de données du canal de demande de largeur de bande.

**16.** Procédé selon la revendication 13, dans lequel le nombre de bits partiels est 3.

FIG.1

EP 2 276 311 B1

FIG.2

FIG.3

FIG.4

500

MS

BS

BW REQ INDICATOR AND QUICK
ACCESS MESSAGE

501

MESSAGE PART
UNDECODABLE

BW ACK A-MAP IE

GRANT FOR BW-REQ MESSAGE

502

BW-REQ MESSAGE

503

NACK FOR CORRUPTED
BW-REQ MESSAGE

GRANT FOR UL TRANSMISSION

504

UL SCHEDULED TX

505

# FIG.5

TIME →

FREQUENCY ↓

| $Pr_0$ | $Pr_4$ | $Pr_8$ | $Pr_{12}$ | $Pr_{16}$ | $Pr_{20}$ |
|---|---|---|---|---|---|
| $Pr_1$ | $Pr_5$ | $Pr_9$ | $Pr_{13}$ | $Pr_{17}$ | $Pr_{21}$ |
| $M_0$ | $M_6$ | $M_{12}$ | $M_{18}$ | $M_{24}$ | $M_{28}$ |
| $M_1$ | $M_7$ | $M_{13}$ | $M_{19}$ | $M_{25}$ | $M_{29}$ |
| $Pr_2$ | $Pr_6$ | $Pr_{10}$ | $Pr_{14}$ | $Pr_{18}$ | $Pr_{22}$ |
| $Pr_3$ | $Pr_7$ | $Pr_{11}$ | $Pr_{15}$ | $Pr_{19}$ | $Pr_{23}$ |

⋮

| $Pr_0$ | $Pr_4$ | $Pr_8$ | $Pr_{12}$ | $Pr_{16}$ | $Pr_{20}$ |
|---|---|---|---|---|---|
| $Pr_1$ | $Pr_5$ | $Pr_9$ | $Pr_{13}$ | $Pr_{17}$ | $Pr_{21}$ |
| $M_2$ | $M_8$ | $M_{14}$ | $M_{20}$ | $M_{26}$ | $M_{32}$ |
| $M_3$ | $M_9$ | $M_{15}$ | $M_{21}$ | $M_{27}$ | $M_{33}$ |
| $Pr_2$ | $Pr_6$ | $Pr_{10}$ | $Pr_{14}$ | $Pr_{18}$ | $Pr_{22}$ |
| $Pr_3$ | $Pr_7$ | $Pr_{11}$ | $Pr_{15}$ | $Pr_{19}$ | $Pr_{23}$ |

⋮

| $Pr_0$ | $Pr_4$ | $Pr_8$ | $Pr_{12}$ | $Pr_{16}$ | $Pr_{20}$ |
|---|---|---|---|---|---|
| $Pr_1$ | $Pr_5$ | $Pr_9$ | $Pr_{13}$ | $Pr_{17}$ | $Pr_{21}$ |
| $M_4$ | $M_{10}$ | $M_{16}$ | $M_{22}$ | $M_{28}$ | $M_{34}$ |
| $M_6$ | $M_{11}$ | $M_{17}$ | $M_{23}$ | $M_{29}$ | $M_{35}$ |
| $Pr_2$ | $Pr_6$ | $Pr_{10}$ | $Pr_{14}$ | $Pr_{18}$ | $Pr_{22}$ |
| $Pr_3$ | $Pr_7$ | $Pr_{11}$ | $Pr_{15}$ | $Pr_{19}$ | $Pr_{23}$ |

SOURCE: IEEE P802.16m/D2, p.491

# FIG.6

FIG.7

EP 2 276 311 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HWASUN YOO et al.** Performance Evaluation of Proposed Physical Structure for BW REQ Channel; C80216m-09_1549. *IEEE DRAFT; C80216M-09J549, 1EEE-SA, ISCATAWAY,* 07 July 2009, vol. 802.16m, 1-18

- IEEE C802.16m-09/0010r2, IEEE 802.16 Amendment Working Document. June 2009
- IEEE C802.16m-08/0003r9a, IEEE 802.16m System Description Document. June 2009